# EUROPEAN PATENT SPECIFICATION

(11) **EP 1 842 705 B1**
(45) Date of publication and mention of the grant of the patent: **16.07.2014**
(21) Application number: 05799679.5
(22) Date of filing: 30.09.2005
(51) Int. Cl.: B60J 5/04

(54) **SUPPORTING MODULE FOR VEHICLE DOORS AND MOUNTING PROCEDURE FOR SAID MODULE**
TRÄGERPLATTE FÜR FAHRZEUGTÜREN UND VERFAHREN ZUR MONTAGE DIESER TRÄGERPLATTE
MODULE DE SUPPORT POUR PORTES DE VÉHICULE ET PROCÉDÉ DE MONTAGE DE TEL MODULE

(30) Priority: 28.01.2005 EP 05381002
(43) Date of publication of application: 10.10.2007
(73) Proprietor: GRUPO ANTOLIN-INGENIERIA, S.A., 09007 Burgos (ES)
(72) Inventor: GARCIA MARTIN, Jose Francisco, E-09004 Burgos (ES); OSORIO ORTEGA, David, E-09001 Burgos (ES); MARCOS GONZALEZ, Cesar, E-09002 Burgos (ES)
(74) Representative: Capitán García, Maria Nuria
(86) International application number: PCT/ES2005/070136
(87) International publication number: WO 2006/082261

(56) References cited:
- EP-A- 1 043 182
- WO-A-02/32709
- WO-A-97/11857
- WO-A1-00/53446
- DE-A1- 10 352 236
- US-A1- 2004 155 483

## Description

### OBJECT OF THE INVENTION,

The present invention relates to a supporting module for vehicle doors in which said module incorporates the usual functional elements provided in motor vehicle doors in order to simplify the mounting tasks.

This module is characterised by the fact that the door trim itself acts as *the supporting element.*

The module is also characterised in that the trim does not provide the sealing function; instead, it incorporates at least one element meant to establish a sealing by covering one or some of the main openings of the inner plate of the door box.

The inner plate of the box has, in addition to the minor opening housing devices such as the speaker, at least one main opening needed to mount the supporting module and its components. This opening (or openings) is covered by one or several sealing elements.

It characterises the fact that the sealing element has an individual attachment system, not external, for its attachment to the door box. Attaching this element permanently separates the wet and the dry area by a sealing.

The dry area has the same conditions as the vehicle interior and lies between the trim and the inner face of the inner plate of the door box, whose main openings are covered by the speaker, the plugs and mainly by the sealing element(s). The wet area corresponds to the box area between the outermost plates.

It characterises a special configuration of the module adapted to the openings of the inner plate of the door box that facilitate the mounting and removal operations of the elements that the module incorporates on the door, as well as providing a sealing.

The module is characterised in that it is free of all structural responsibilities, which fall on the door itself.

This invention is characterised in that it allows to attach the sealing element to the door box space in different attachment relationships with the trim.

### BACKGROUND OF THE INVENTION

Supporting modules for vehicle doors incorporating several functional elements, such as a speaker, lock, window lift, etc. are known in the state of the art.

These supports may have merely supporting roles or may additionally have structural roles, reinforcing the door.

Supporting modules are employed placed in the door box which are then covered by the trim. Also known are supporting trim panels that require the use of panels to separate the dry and the wet area.

In any case, it is always necessary to ensure the seal between the dry and the wet area, for which several solutions are also known.

Worth mentioning are the following documents, cited as solutions to the above:

Patent WO03031233 relates to a trim door module that incorporates several functional elements (such as a speaker, door lock, etc.) to which is attached a flexible sheet that acts as a shield against water passage to provide a sealing. This flexible sheet is attached to the door module by an adhesive and is provided with a sealing gasket on all or part of the perimeter of the water shield. It also has a peripheral shape similar to that of the trim module.

US Patent 6510657 relates to a supporting module for vehicle doors that supports functional elements such as the window lift, speaker or lock. Said module is formed by two panels joined by a rigid structure, which are placed in the housing provided for such purpose on the inside of the door with a configuration similar to that of the modules, so that they fit in perfectly and are sealed to provide a waterproof union.

Another example is US Patent 6767049 , which relates to a trim panel for vehicle doors to which a panel is attached that acts as a water shield preventing water to pass from the outside of the vehicle to its interior compartment, having a similar configuration to the panel. This waterproof shield is sealed to the trim by an adhesive union and is provided with several orifices, which are also surrounded by a sealing adhesive, which allow mounting the various functional elements typically incorporates in vehicle doors.

US Patent 5904002 relates to a structural supporting module for motor vehicle doors. It is a trim module that supports functional elements such as the lock, window lift, speaker and switches, but which requires an additional panel to provide a sealing. It is a sheet with a similar configuration to that of the supporting panel that is joined to it by an adhesive.

On another hand, the known solutions used to obtain a seal of the door are quite varied.

In other cases, the solution employed to obtain a seal consists of including a structural element attached to a large opening of the door. This element, generally known as a module carrier plate, is structural because the door opening is large, so that the door plate cannot fulfil a sufficiently large structural function to provide the required strength. Some examples of solutions similar to including a module carrier plate are described in patents D928685, US6571515 and US6510657.

Patent WO0176900 uses an injected element meant to cover a small opening in order to seal the door opening. This element is in turn a support for various door components, as it is exposed and includes components that are projected towards the interior of the vehicle. This element is not connected in any way to the trim; in addition, its location on the door does not allow integrating any function other than an armrest. The space it covers on the door does not allow to mount elements in the wet area such as window lift guides or to place the lock in it.

Patent US20040155483 discloses a door module assembly for a motor vehicle door which comprises a plate like carrier holding a plurality of door hardware components which seals all the mounting holes of the motor vehicle door at the same time, and a trim panel which is pre-fixed to the carrier.

Patent DE10352236 discloses a door module assembly for a motor vehicle door which comprises a trim panel and a sealing element which seals the main hole of the vehicle door where the sealing element and the trim module are connected by permanent attachment means.

Although they provide a seal of the door, all of these solutions have several drawbacks. Solutions employing flexible sheets require the attachment of all the points of the perimeter, or alternatively the support of an element that is more rigid than the sheet, also requiring the plate on which they rest to be free of dust and grease to ensure its adherence.

In those inventions that use a module carrier plate this element, in addition to implying an additional piece, is a stiff element of large size, weight and cost. It also requires a large opening in the door, which weakens it so that the module carrier plate must provide the stiffening function. In addition, given its great weight and size it is cumbersome to handle.

The present invention describes a trim door module that incorporates several functional elements of the door and lacks any structural responsibilities.

The present invention facilitates the mounting and removal operations of the panel and the various functional elements incorporated, and ensures a sealing in a simple manner by incorporating a sealing element that is directly attached to the door housing.

### DESCRIPTION OF THE INVENTION

The present invention relates to a supporting trim module for vehicle doors. The door trim is an element made of a flexible material, preferably plastic, which is not structural and incorporates several functional elements of the door.

In a conventional motor vehicle door two differentiates areas are normally defined: the dry area and the wet area, as indicated below.

The dry area is generally located between the face of the door box nearest the interior compartment and the door trim. This area has the same conditions as the intertor compartment of the vehicle.

The wet area is located inside the door box, between the two outermost door plates. Water and dust enter this area, so that all components placed in this area must be suitably protected and able to withstand these conditions. In general, this implies an increased cost of these components.

In any case, it is necessary to have sealing means that separate the dry and wet areas of the door box adequately.

In the present invention, the trim panel mounts or pre-mounts (in the case that a component is mounted temporarily on the panel, or needs an additional operation for its final mounting) several functional components of the door, thereby performing the trim function as well as that of supporting element. To mount the components located in the wet area on the door, the inner plate of the door box is provided with at least one main opening; later, as will be described below, all main openings will be covered with a sealing element that establishes a sealing to separate the dry area from the wet area, ensuring the seal.

The inner plate of the door box may also be provided with another opening that is covered by the speaker, and other secondary orifices for mounting or regulating other components attached to the door. These orifices will also be covered or sealed later to ensure a full seal.

In this way, the separation between the dry and the wet area is established by the inner plate of the door box, and the sealing is achieved by a sealing element that covers the main opening of the inner plate of the door box, precisely the opening that provides access to the interior of the door box that constitutes the wet area. As stated above, there may be several main openings, in which case each one will be covered by a sealing element.

This sealing element, which in any case once installed will always be contained inside the door and concealed from view, is characterised by having own attachment means that allow a fast and simple attachment to the inner plate of the door box, as well as other temporary attachment means to the trim. In addition, a very reliable sealing is achieved. The seal area is small compared to the total area of the door and as the inner plate of the door box provides the stiffening function the rigidity is barely affected.

The temporary attachment means of the sealing element to the trim panel, these may be of two types: one first type which establishes a connection to the trim panel when it fulfils its supporting function until the time of installation, and a second type that maintains this temporary connection during the installation, so that in the second type two movements of the sealing element with respect to the trim panel are possible: a vertical movement and another movement perpendicular to the trim panel.

In addition; as the trim panel does not have to provide the sealing, the assembly does not require the use of gaskets or other elements required to ensure the sealing.

Some of the advantages provided by the solution proposed by this invention, regardless of the mode of attachment of the trim to the sealing element, are the following:
The components do not have to be able to work in wet conditions, thereby reducing their cost of manufacture and increasing their reliability;
The mounting and removal operations of the components are performed in a traditional manner, without requiring changes in job positions or tools;
The seal established against the entry of dust, noise and water is identical to that obtained with a module carrier plate;
An improved performance in case of impact, flexion, door closing and loads exerted on the handle. The door box has orifices of small size, so that the structure is stronger and more resistant to impacts. This strength means that the flexion will be lower, the resistance of the assembly when closing the door will be greater and the load on the handle when closing the door will have an optimal performance;
The wire harness is established in the dry area and is connected and checked in said area, thereby reducing costs as it is not necessary to use special components that resist humidity. In addition, the mounting procedure does not require having to insert the hand through the plate orifice.

In the first case in which the connection between the trim panel and the sealing element is temporary during the supporting function until the time of installation, the following is also provided:
A simple mounting procedure, as since the sealing element and the trim panel are separated during the installation the worker does not have to handle the entire assembly performing complex motions to thread the lock, and may rest the trim panel next to the door holding only the sealing element, thereby simplifying the mounting operations;
Freedom to choose the mounting sequence of operations. The components may be pre-attached to the inner plate of the door box to later attach them permanently to the inner plate of the door box;
Freedom in the design of the trim panel, as it is not necessary to define specific areas to provide access when mounting the internal components of the door;
Integration of functions; it is possible to integrate functions related to the rear part of the door, lock security, energy absorbing elements, panel attachments, water deflection elements, etc.

The trim panel also has a supporting nature and has several functional elements of the door incorporated, which can be:
1. Mounted permanently; these are components that belong to it, as they are mounted permanently on the panel. This is the case with the base of the pocket for containing objects (or the pocket front, according to each case) or the weather strip;
2. Pre-mounted; this means that they require a final mounting operation to attach them to the door in their working position. This is the case with the door handle, the speaker or the sealing element. However, the speaker may be bolted to the trim;
3. Temporarily mounted; this is, their union to the panel is temporary, and only meant to allow handling the assembly until their final mounting as their working position is in the door itself. This is the case with the window lift motor, rail, drum lid or external door opening actuator.

In any case, the trim panel also acts as a supporting element that facilitates the mounting operations of the various functional components of the door, reducing the number of operations required and the time of execution by simplifying the handling and transportation of the components until their final mounting on the door.

In addition, after all the components have been mounted on the door it is possible to remove each one independently without having to dismantle the entire assembly, such as when it is necessary to repair or replace any component.

Some of these components require a structural attachment, such as the door handle, the lock or the window lift rails, which must be attached directly to the door to which the loads are transmitted.

A special element is the door insert. If the sealing element remains attached to the trim at all times, it will remains disassembled during the entire mounting process, albeit temporarily pre-mounted, as it is the last part attached to the trim panel. The insert covers an opening in the trim panel that allows the final assembly of the door window and other accessories located in the dry area of the vehicle. The insert is joined to the trim panel at the end of the mounting operations by elements that can belong to the insert itself or be external to it. However, when the sealing element is attached to the trim panel only during the supporting function until the time of installation, the insert does not have to be removed as the trim paenl does not prevent the installation in the dry area of the various components, and specifically of the sealing element.

It is necessary that the trim panel and the elements that it incorporates can be mounted easily and quickly. For this reason, the trim panel and the inner plate of the door box have openings that simplify these mounting operations and provide access to the wet area from the dry area.

To execute the mounting, the components located in the wet area of the vehicle must be mounted first. To access this area the inner plate of the door box has at least one main opening that provides access to the wet area from the dry area.

After this the inner plate of the door box is sealed with the corresponding sealing elements and the components located in the dry area are mounted; or, as the trim panel has not been incorporated yet in the first case in which a temporary attachment is established by the temporary attachment means of the first type, or in the second case in which a temporary attachment is established by the temporary attachment means of the second type, through the opening made in the trim panel with the insert removed. In the latter case the insert is mounted after the trim panel.

Mounting of the various elements is also made possible by several auxiliary orifices and attachment elements provided with self centring means that are provided in the trim panel and the door box.

Lastly, the sealing element allows integrating other additional components, such as an energy-absorbing element in case of lateral impacts, the lock support, the window pane guide, attachment brackets, etc. It can also perform other additional functions such as protection against undesired access to the lock from the outside, such as by including a security ribbing.

### DESCRIPTION OF THE DRAWINGS

The present descriptive memory is accompanied by a set of drawings that illustrate the preferred example without limiting it in any way.
Figure 1 shows on the top an elevation view of an embodiment of the trim panel on the side facing the vehicle interior and on the bottom an elevation view of the rear face of the trim panel in the case that the panel incorporates a single sealing element.
Figure 2 shows the plate of the door box seen from the dry area with a single main opening for access to the wet area of the door box.
Figure 3 shows the trim panel as seen from the dry area without the insert, leaving an opening through which some of the elements incorporated in the trim panel can be seen.
Figure 4 shows a representation of the sealing element with a lock. On the bottom left is an embodiment of a form of attachment to the inner plate of the door box with a tab and on the bottom right is an enlarged view of this form of attachment with the sealing element.
Figures 5 shows a cross section of the assembly of the bottom edge of the sealing element on the inner plate of the door box and an enlarged view of the compressed sealing element.
Figure 6 shows a cross section of the inner plate of the door box and the sealing element in an initial position, before placing the sealing element on the corresponding main opening of the inner plate of the door box, and in a final position in which the sealing element covers the main opening.
Figure 7 shows an embodiment of the temporary attachment means of the second type of the sealing element to the trim panel and an enlargement showing the possible relative movements between them.
Figure 8 shows an embodiment of the invention in which the sealing element has a temporary dependence on the trim panel by the temporary attachment means of the first type, so that during the mounting process it is possible to separate them. The representation on the left corresponds to a view from outside the vehicle and the representation on the right corresponds to a view from inside the vehicle.
Figure 9 shows an enlarged view of the subassembly of the same embodiment in which the lock support and a segment of the window guide are shown joined to the sealing element.
Figure 10 shows a complete view of the same sealing element in which certain details are shown such as the integration of the absorbing element in case of impact.
Figure 11 shows a last view of the same sealing element with the temporary attachment means of the first type to the trim panel when the latter has a supporting function until the time of installation.
Figure 12 shows an enlarged view of a grommet type connection for anchoring the wire harnesss to the vehicle.

### DETAILED DESCRIPTION OF SEVERAL PREFERRED EMBODIMENTS

The present invention consists of a supporting module for vehicle doors, intended for installation on doors of motor vehicles.

It consists of a trim panel (2) that acts as a non-structural supporting element, incorporating several functional components of the door, to facilitate its handling and transport to its final working position. This trim panel (2) is free of any structural responsibility and does not provide the sealing. The sealing is provided by incorporating a component, hereinafter referred to as the sealing element (3), which is described further below

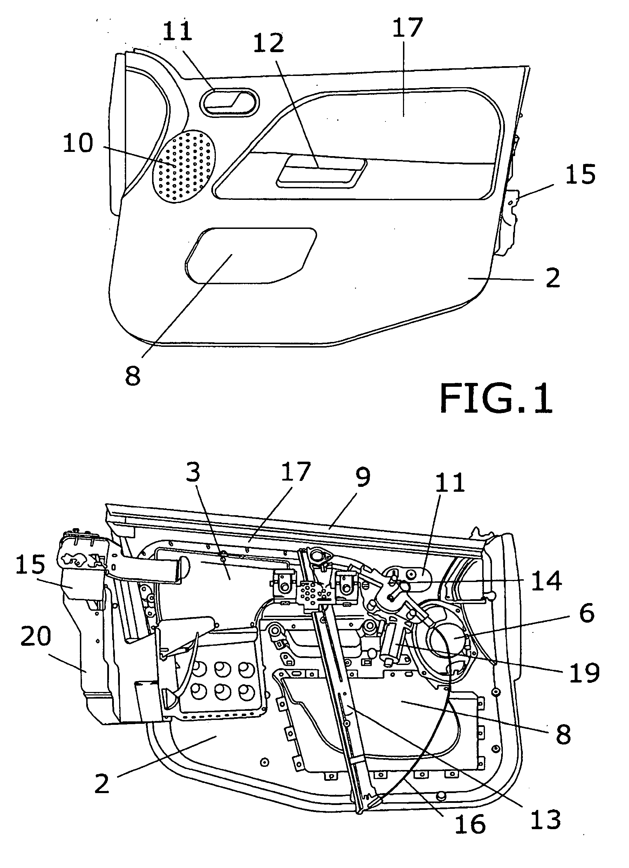

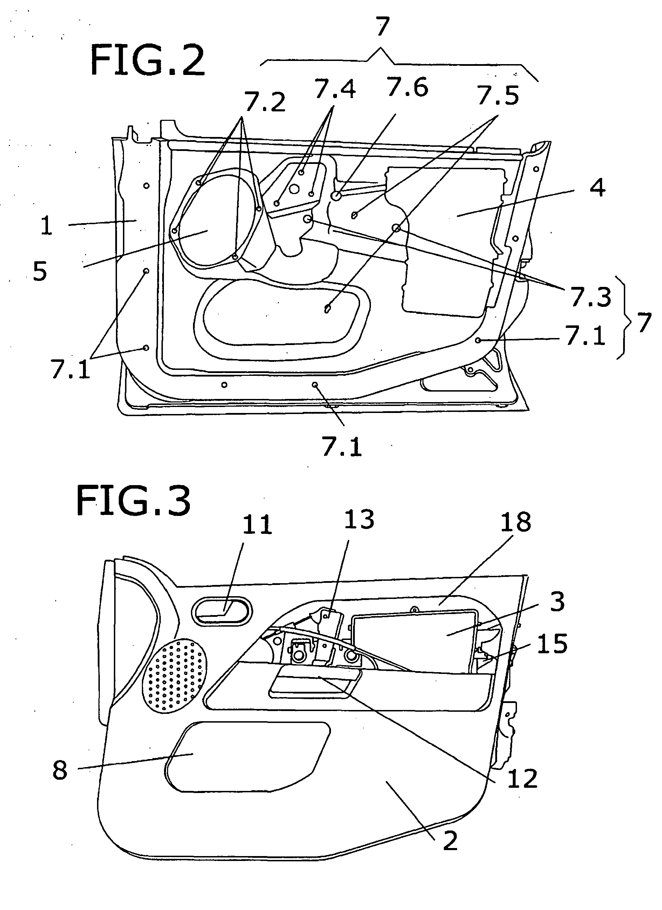

The function of the trim panel (2) as a supporting module simplifies the handling and mounting operations of the various functional components of the door. In order to allow mounting these components, as well as their independent removal, the inner plate (1) of the door box has at least one main opening (4) and an additional opening (5) to house the speaker (6), as shown in figures 1 and 2, as well as the secondary orifices (7) needed to mount or regulate said components.

The inner plate (1) of the door box can have more than one main opening (4), each one closed with a sealing by the corresponding sealing element (3). The examples shown correspond to the case of a single main opening (4) and therefore to a trim panel (2) incorporating a single sealing element (3).

Hereinafter we will refer only to the case of one main opening (4) and one sealing element (3), considering however at all times that there may be more than one opening (4) and thus more than one sealing element (3).

As regards the aforementioned secondary orifices (7), this denomination extends to different minor openings, shown in figure 2, which to complete the description are now described briefly.

The inner plate (1) of the door box has openings (7.1) located peripherally on the bottom and right and left sides, meant to anchor the trim panel (2). The attachment is effected in this case by clipping the trim panel (2) and the inner plate (1) of the door box, the clip itself providing the sealing.

To anchor the speaker (6) to the inner plate (1) of the door box, the speaker opening (5) is provided on its perimeter with the corresponding minor openings (7.2) for screwing the speaker (6) onto the plate (1). In this case the screws also provide the sealing. In another example of embodiment the speaker (6) can be screwed on the trim panel (2), and thus does not have to be screwed afterwards on the inner plate (1) of the door box.

Other openings provided are the openings (7.3) intended to house the body of the door handle (12) and the openings (7.4) that allow anchoring the window lift motor (19). In this case, the attachment and the sealing are also ensured by the attachment screws.

The openings (7.5) that allow attaching the window lift rail or rails (13) are covered by corresponding plugs that ensure a sealing.

Another opening (7.6) is required to regulate the window anchoring, which is also covered by the corresponding sealing plug.

As mentioned above, one can distinguish in the door a dry area with the same conditions as the vehicle interior and a wet area that is exposed to the entry of dust and water from the outside. Any components located in the wet area require a suitable protection. In any case, the two areas must be separated by a sealing.

In the present invention the separation of the dry area and the wet area is established by the inner plate (1) of the door box, while the sealing is established by the sealing element (3) that covers the main opening (4) of said inner plate (1) of the door box. The sealing element (3) is also incorporated in the pre-mounted trim panel (2) that is supported by a temporary attachment; subsequently, several final operations establish the final mounting on the inner plate (1) of the door box. Although a first embodiment of the invention is described using temporary attachment means of the second type, other temporary attachment means of the first type will be described further below that only fulfil their function attaching the sealing element (3) to the trim panel (2) until the time of installation.

As shown also in figure 2, the inner plate (1) of the door box is also provided with the main opening (4) (which provides access to the wet area), with another opening (5) that is the housing of the speaker (6) and other secondary orifices (7) that are adequately sealed to ensure a full seal between the wet and dry areas, as mentioned above.

Figure 1 shows an elevation view of the trim panel (2) with several components incorporated. The top part of the figure shows the side facing the vehicle interior. The bottom part of the figure shows the opposite side, which faces the dry area of the door box.

The trim panel (2) acts as a supporting element in which some elements are fixed, this is, in their working position, while others are pre-mounted and require an additional operation to fix them in their final working position and others have a temporary attachment, i.e. they are incorporated to the trim panel (2) to facilitate its handling and mounting but are fixed in different positions, as described below.

In this preferred embodiment shown in figure 1, the base (8) of the pocket, the weather strip (9) and the clips (not shown) for attaching the trim panel (2) to the door, are components that are attached permanently to the trim panel (2).

In this example, the base (8) of the pocket is mounted permanently on the trim panel (2) and the front of the pocket is part of the trim panel (2). In other embodiments the opposite may be true, so that the front of the pocket is mounted permanently on the trim panel (2) and the base (8) of the pocket that forms part of it.

Also in the example shown in figure 1, the grille (10) of the speaker (6) is also fixed to the trim panel (2), although in other embodiments it may be a part (10) independent of the panel (2) that is attached later, although it may be pre-mounted on the trim panel (2) to facilitate the manipulation of the assembly.

Other components are already mounted in their working position in the trim panel (2), such as the wire harness and the inner actuation (11) of the door.

The body of the handle (12) and the speaker (6) are instead pre-mounted on the trim panel (2) for its handling and transport to the door, where they require final operations to fix them in their working position.

The trim panel (2) also incorporates elements which, as said trim panel (2) is a supporting element, are only pre-mounted on it to facilitate their handling, but which must be fixed to the door later. This is the case of the lock (15) and its case (20), and the window lift assembly consisting of the window lift rail or rails (13), the motor (19), a reducer, the transmission means (16), the drum lid (14) and the means for redirecting the transmission means.

Figure 1 also shows the insert (17) and the sealing element (3).

The insert (17) remains disassembled while the components are mounted on the door, as it reveals an opening (18) in the trim panel (2) required to mount the window glass and other accessories on the door, as will be described later. Therefore, the insert (17) is a disassembled part that is joined to the trim panel (2) in a temporary manner.

The sealing element (3) is another element pre-mounted on the panel (2) that is not definitively attached to the door until one of the final mounting operations after positioning the module, as the opening (4) that it covers in the inner plate (1) of the door box provides access to the wet area of the door box for mounting the components located in this area.

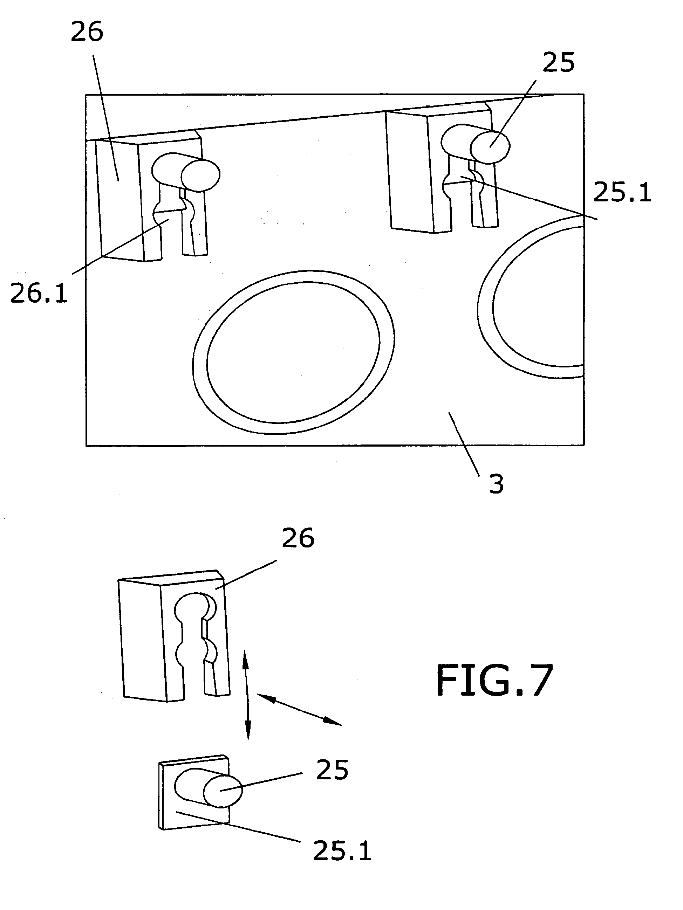

Figure 7 shows an embodiment of the invention in which the sealing element (3) is connected to the trim panel (2) in a temporary manner by temporary attachment means of the second type.

Figure 7 shows pivots (25) corresponding to the trim panel (2) (the trim panel (2) is not shown in the figure), which end at a retaining heads (25.1). The pivots (25) are inserted in boxes (26) that emerge from the face of the sealing element (3) facing the dry area.

The boxes (26) have slits (26.1) that allow a vertical movement of the pivot (25) in the box (26). Horizontal movement perpendicular to the trim panel (2) is also possible; the retaining heads (25.1) prevents the pivots (25) from leaving the boxes (26) of the sealing element (3). The bottom part of figure 7 shows said vertical and horizontal movements by arrows.

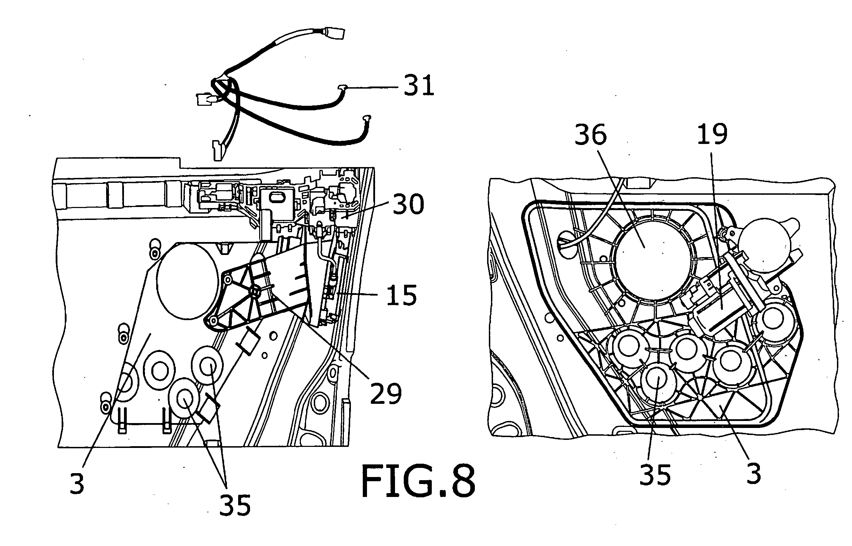

Figures 8, 9, 10 and 11 show another embodiment of the invention in which the sealing element (3) is connected to the trim panel (2) in a temporary manner by temporary attachment means of the first type, only when the trim panel (2) has a supporting function until the time of installation.

The attachment of the sealing element (3) and the trim panel (2) is established by clips (33, 34). This example uses male clips (33) at the peripheral points and one female clip (34) at a point coincident with a turret of the impact absorption element, as it is raised from the main surface of the sealing element (3).

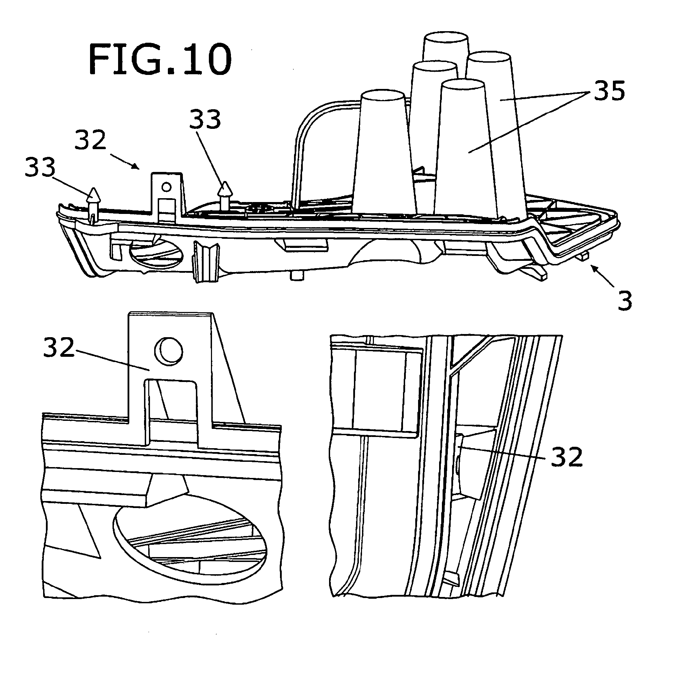

Figure 10 also shows a bracket (32) that allows to rejoin the sealing element (3) to the trim panel (2) at the final position.

In this same case, at the time of installation the sealing element (3) is separated from the trim panel (2). This separation allows to leave the trim panel (2) aside, simplifying the manipulation of the sealing element (3) with the elements joined to it: the lock support (29) and a segment (29.1) of the window guide that is integrated in the support (29).

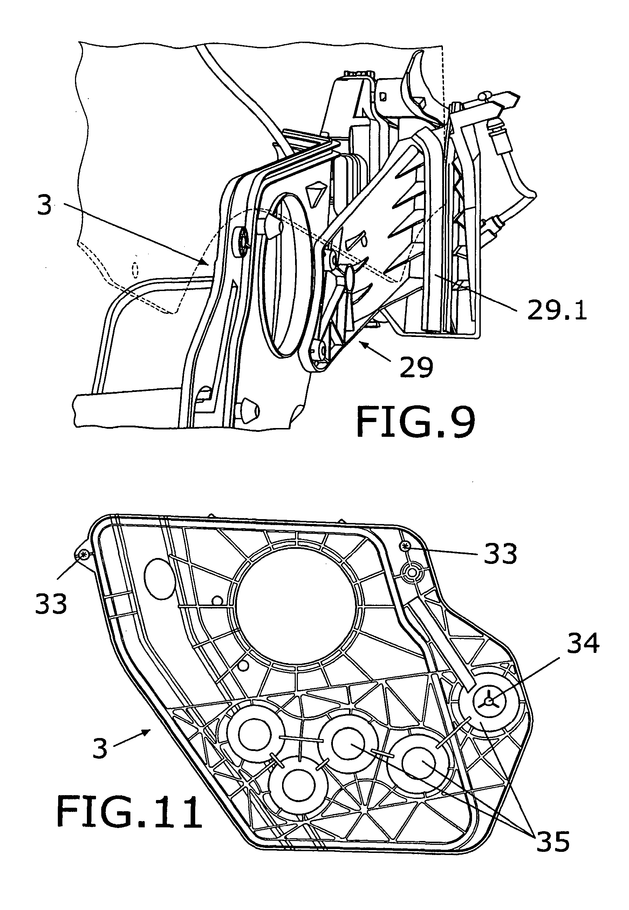

The latter details are shown in figures 8 and 9. Figure 8 also shows the external opening module (30) that is placed on the lock support (29) and also shows separately the wire harness (31).

The lock (15) is located at the end of the lock support (29), coinciding with the edge of the door, where it is permanently attached.

In this example of an embodiment the impact absorption element (35) or padding has been integrated, the window guide (29.1), its rubber, the wire harness (31) and the lock (15) are mounted: the external opening module (30) and the window lift motor (19) are pre-mounted.

It is also possible for the sealing element (3), as in other embodiments of the invention, to be provided with a security ribbing that prevents access to the window supports so that it cannot be broken.

It should be remarked that in this embodiment it is not necessary for the insert (17) to allow access to the inside of the door box, so that it may be fixed from the start on the trim panel (2).

Described next is the mounting procedure for the various functional elements of the door shown in figure 1, from the trim panel (2) to its final working position on the door.

Starting with the trim panel (2) as a supporting element with the aforementioned elements incorporated, shown in figure 1, the mounting operations for the functional component and trim panel (2) on the door are the following:
1. Placing the trim panel (2) next to the door;
2. Disengaging the window lift assembly and positioning it in the wet area of the door box;
3. To execute this positioning and attachment the wet area is accessed through the main opening (4) provided in the inner plate (1) of the door box which remains open. If the window lift configuration allows, the window lift assembly can be mounted between the outer and inner skin of the door plate box, on the window hugger side. In addition, there is no other element covering the inner plate (1) of the door box, so that the operator can see the various orifices (7) required to attach the aforementioned components;
4. Attaching the window lift motor (19) in the dry area of the door (1) and connecting it to the drive chain (16) with the corresponding wire harness. In this operation the worker passes the window lift assembly through the main opening (4) and, with the motor (19) in view, attaches it through the corresponding openings (7.4) to then attach the drum lid (14). Bolting is only required at this time when the connection between the sealing element (3) and the trim panel (2) is temporary with attachment during the installation, as the trim panel (2) covers it and would not allow bolting afterwards;
5. Passing the lock (15) through the main opening (4) that provides access to the wet area;
6. Connecting the electrical and mechanical terminals to the components mounted on the trim panel (2);
7. Mounting the trim panel (2) on the door. When the trim panel (2) remains attached to the sealing element (3) during installation, the panel trim (2) will have the insert (17) removed to reveal the opening (18) that houses it, in order to continue with the following mounting operations. In this case the sealing element (3) is pre-positioned on the panel (2);
8. Mounting the window glass. When the trim panel (2) remains attached to the sealing element (3) during installation, the assembly is performed by accessing through the space (18) left open by the insert (17). The glass is placed on and attached to the carriages of the window lift guides (13);
9. Attaching the sealing element (3) on the door, covering the main opening (4) providing access to the door box through the space (18) left open by the insert (17) when this is the case, as described later in greater detail;
10. Sealing the secondary orifices (7), accessing through the insert space (18);
11. When there is a temporary attachment of the trim panel (2) remains to the sealing element (3), mounting the insert (17) on the panel (2). In this embodiment the insert (17) is attached by clipping. Other modes of attachment are also possible;
12. Screwing the body of the handle (12) onto the door.

The speaker (6) may be mounted in two ways: bolted on the trim panel (2) in which case it would not require any operation, or pre-mounted on the trim panel (2) so that it must be bolted to the inner plate (1) of the door box.

In this case, when the speaker is pre-mounted on the trim panel (2) and when the attachment of the sealing element (3) and the trim panel (2) is temporary until installation, the speaker (6) is bolted on after attaching the window lift motor (19) in a phase in which several elements are bolted on. When the speaker (6) is pre-mounted on the trim panel (2) but the attachment between the sealing element (3) and the trim panel (2) is temporary during the installation, the speaker (6) is attached after positioning the motor (19) and before placing the module of the door panel (2).

The mounting operations described above can be complemented by the following for greater detail.

The lock (15) and lock case (20) are joined to the sealing element (3) in any mode of attachment and the assembly is pre-positioned in the trim panel (2) when their attachment is maintained until the end. Therefore, when the lock (15) is mounted, the lock (15), its case (20) and the sealing element (3) are positioned in a single operation.

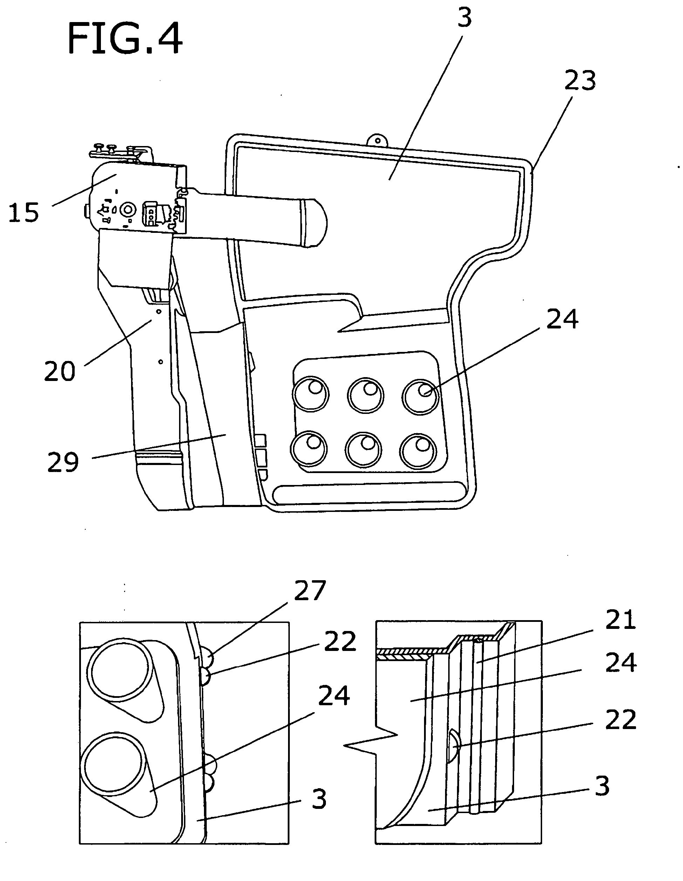

Figure 4 shows the sealing element (3) and its elements (22) for attachment to the door in one example of embodiment.

The sealing element (3), as mentioned above, is the element that closes the main opening (4) of the inner plate (1) of the door box and which provides access to the wet area. This sealing element (3) provides a sealing between the dry area and the wet area.

Said sealing element (3) is made of plastic and adapted to the shape of the main opening (4) of the door box. In addition, to ensure the sealing the sealing element (3) is also provided with a peripheral elastic sealing gasket (21) and protrusions (22) that maintain the sealing element (3) in its working position, ensuring its correct operation as they allow attaching the sealing element (3) to the inner plate (1) of the door box.

As shown in figure 4, the sealing element (3) has tabs (22) on the perimeter of the side facing the wet area of the box. On the perimeter of the sealing element (3), opposite the tabs (22), the sealing element (3) is provided with a lip (23) that houses the sealing gasket (21). Thus, between the peripheral lip (23) and the tabs (22) is a space approximately equal to the thickness of the inner plate (1) of the door in which it is mounted, plus a space filled by the sealing gasket (21) so that a pressure makes the gasket (21) give until the tabs (22) of the sealing element (3) can reach beyond the inner supporting plane.

The sealing element (3) is pre-mounted on the trim panel (2) with a temporary attachment means that connects them. When this connection is maintained at all times, the temporary attachment means of the second type, a certain relative movement is allowed between the parts (2) and (3), as mentioned before. When the temporary connection is only maintained during the supporting function until the time of installation, the temporary attachment means of the second type, the trim panel (2) no longer hinders the manipulation of the sealing element (3). Its final mounting is performed by the following steps.

First the sealing element (3) is positioned resting its peripheral edge (23) on the main opening (4) of the box, on its dry area, slightly displaced from its final position. The position is such that the peripheral gasket (21) rests on the inner plate (1) of the door box and the tabs (22) are opposite incuts (27) made in the inner plate (1) of the door box for this purpose. In this position, by exerting a pressure to overcome the resistance of the compression of the sealing gasket (21) the tabs (22) can overcome the incuts (27).

Then the sealing element (3) is made to slide in a vertical downwards sense to its final position, so that all the tabs (22) rest on the side of the plate opposite that in which the sealing element (3) rests, as it is not opposite the incuts (27).

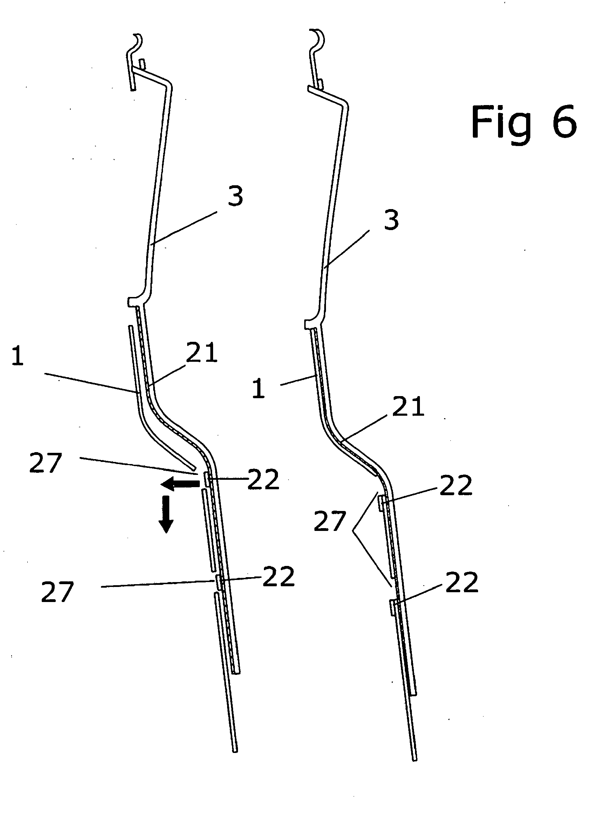

Figure 6 shows a cross section of the sealing element (3) and the inner plate (1) of the door box.

In the drawing on the /eft of figure 6 the sealing element (3) is pre-positioned with respect to the main opening (4) such that the tabs (22) are opposite the incuts (27) made in the inner plate (1) of the door box. Two arrows indicate the above-described movements of the sealing element (3) to reach their final position from this starting position.

The drawing on the right of figure 6 shows the sealing element (3) already in its final position. The tabs (22) are shown resting on the face of the inner plate (1) of the door box opposite that on which the sealing element (3) rests.

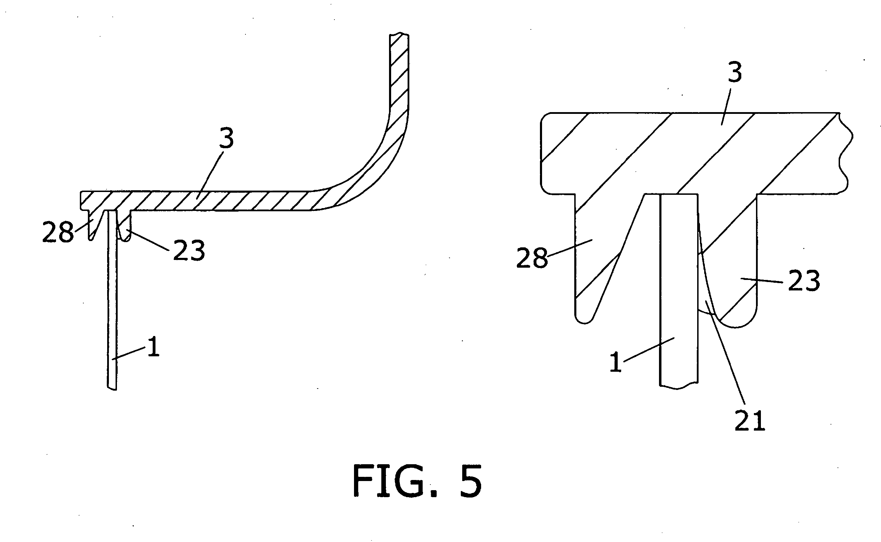

Figure 5 shows the attachment of the bottom edge of the sealing element (3) to the inner plate (1) of the door box. The bottom edge has a second lip (28) such that the section of the edge has a wedged "V" shape. The sealing gasket (21) in the bottom part of the sealing element (3) is placed between the two lips: the peripheral lip (23) surrounding the entire element (3) and the second bottom lip (28).

When the sealing element (3) is lowered the wedge action is favoured, placing the inner plate (1) of the door box between the two lips (23, 28) and pressing the sealing gasket (21) as shown in the enlargement of figure 5.

Lastly, the attachment of the sealing element (3) is strengthened by an additional attachment element such as a screw or a rivet.

Other means for attaching the sealing element (3) to the inner plate (1) of the door box are also possible. For example, by pairs of tabs. This is, each tab (22) is accompanied by an additional tab to form pairs, so that once mounted on the inner plate (1) of the door box it will be embraced by each pair of said tabs (22), one tab of each pair on either side of the inner plate (1) of the door box.

In addition, the sealing element (3) providing the sealing can perform additional functions. Thus, it can incorporate energy absorption elements in case of impact, such as deformable cones (24).

Another function that can be integrated in the sealing element (3) is protection against undesired access from outside the vehicle to the lock (15). For this purpose, a skirt can be included to protect sensitive parts against undesired opening.

Alternatively, in another example of embodiment in which there are no additional parts for providing the seal and in which there is no previous attachment of the trim panel (2) and the sealing element (3) but there is a temporary attachment until installation, three sub-assemblies can be differentiated:
window lift assembly without a motor;
the trim panel (2);
the sealing element (3) which supports the lock support (29), the lock (15), the external opening lever (30),
the window lift motor (19) and the wire harness (31), all of this as shown in figure 8.

Figure 9 shows how the sealing element (3) in addition to carrying out the sealing and impact-resistance functions acts as a union to the lock through the lock support (29), the support (29) having a groove (29.1) to guide the window pane.

In addition and in order to provide added security to the lock and inner opening lever, the sealing element (3) is provided with a security ribbing on the face visible from the inside.

To allow attaching the sealing element (3) to the trim panel (2) once the attachment element is housed in the plate orifice, which if possible will be the only orifice, attachment means are provided on the sealing element (3) which in the case shown in figure 10 will be a bracket (32).

Although it is not intended at this time to fully incorporate the sealing element (3) on the trim panel (2), during the transport of the set of parts required for the mounting process and in order to keep the sealing element (3) joined to the trim panel (2), provided on the sealing element (3) are a number of male clips (33) and a truncoconical shaped protrusion that acts as a female clip (34), as shown in figure 11.

For the sake of clarity, the stages involved in the mounting of the trim panel (2) as a module according to the configuration of this option are listed below.
1. Placing the trim panel (2) next to the door;
2. Disengaging the window lift assembly and positioning it in the wet area of the door box (1);
3. Positioning and attaching the window lift assembly;
4. Positioning the window lift motor (19) and attaching it by clipping;
5. Positioning the sealing element (3);
6. Positioning and attaching the external opening lever by clips on the outer plate of the door box through the orifice (36) of the sealing element (3);
7. Placing the window pane in place;
8. Screwing on all the remaining elements: speaker (if applicable), motor (19), sealing element (3), lock (15), joining the window lift to the window;
9. Sealing the secondary orifices (7);
10. Mounting the trim panel (2) which in this case includes the insert (17);
11. Screwing on the handle and inner opening lever.

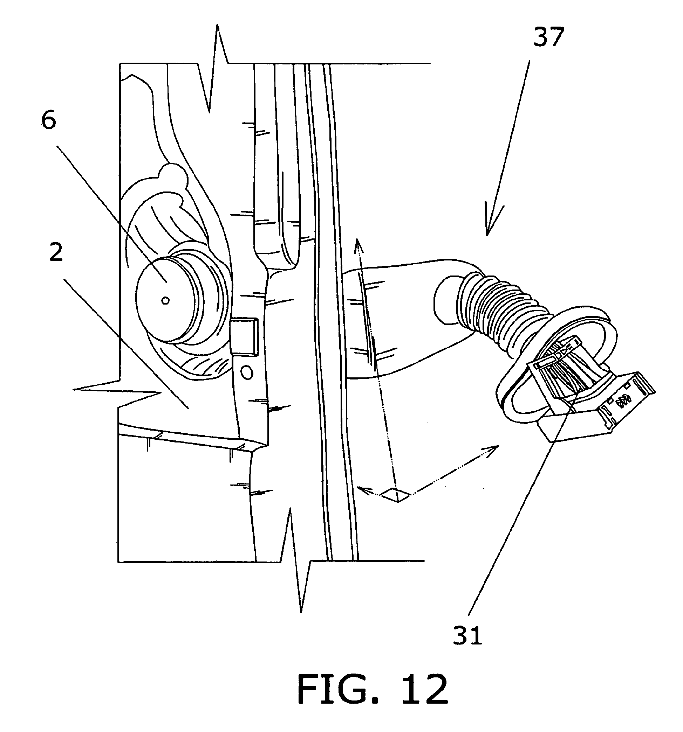

Figure 12 shows a detail that can be applied to any embodiment described for the invention, in which a grommet type connection (37) is used to anchor the cables or wire harnesss (31) to the vehicle's wire harness. The grommet type connection (37) described as a form of embodiment is configured in an L-shape on the hinged side of the door, extending as a bellows to allow the flexion required when opening and closing the door.

Although connections of this type are known, it is considered to be applicable to this invention regarding the installation procedure as the grommet type connection can be either mounted or integrated in the injection of the trim panel (2), so that a mounting operation is avoided, this mounting operation being included in the mounting of the modular door panel.

## Claims

1. Supporting module for vehicle doors constructed as a non-structural panel, meant to act as a trim panel (2) on doors having a box with at least one main opening to allow manual access by an operator for mounting, essentially, the components installed in the wet area, the box being able to have other openings and orifices not intended for manual access by the operator, such as the speaker housing or auxiliary orifices for allowing tools to pass, wherein:
• the trim panel (2) incorporates, on each main mounting opening (4) provided in the inner plate (1) of the door box, a corresponding sealing element (3) meant to cover it in order to provide a sealing between the dry area and the wet area of the door;
• the trim panel (2) also incorporates a lock (15) and its case (20), which are joined to the sealing element (3) in any mode of attachment and the assembly is pre-positioned on the trim panel (2) and/or at least one window lift rail (13), as well as a reducer motor (19), transmission means (16), a drum lid (14) and means for redirecting the transmission means,
**characterised in that**
the sealing element (3) has own attachment means that allow a fast and simple attachment to the inner plate (1) of the door box, as well as other temporary attachment means (25, 26, 33, 34) to the trim panel (2).

2. Supporting module for vehicle doors according to claim 1, **characterised in that** the trim panel (2) incorporates a single sealing element (3) meant to cover a single main mounting opening (4) present in the inner plate (1) of the door box.

3. Supporting module for vehicle doors according to claim 1, **characterised in that** between the trim panel (2) and the sealing element (3) the temporary attachment means are established during the supporting function until the time of installation of the trim panel (2) by temporary attachment means of the first type.

4. Supporting module for vehicle doors according to claim 1, **characterised in that** between the trim panel (2) and the sealing element (3) the temporary attachment means are established during the supporting function until the time of installation of the trim panel (2) and maintain this temporary connection during the installation, so that two movements of the sealing element (3) with respect to the trim panel (2) are possible: a vertical movement and another movement perpendicular to the trim panel (2) by temporary attachment means of the second type.

5. Supporting module for vehicle doors according to claim 3, **characterised in that** the temporary attachment means of the first type of the sealing element (3) are a number of clips (33) and at least one protrusion with a truncoconical shape that presents a female clip (34) that allow to maintain the sealing element (3) next to the trim panel (2).

6. Supporting module for vehicle doors according to claim 3, **characterised in that** on the sealing element (3) is a bracket (32) that allows to rejoin the sealing element (3) to the trim panel (2) at the final position.

7. Supporting module for vehicle doors according to claim 4, **characterised in that** the temporary attachment means of the second type (25, 26) consist of pivots (25) that emerge from the trim panel (2) and end at a retaining head (25.1), which fit in slits (26.1) made in boxes (26) attached to the sealing element that allow a relative vertical movement and a horizontal movement perpendicular to the trim panel (2) between the sealing element (3) and the trim panel (2).

8. Supporting module for vehicle doors according to claim 4, **characterised in that** the trim panel (2) is also provided with an access opening (18) for completing the final mounting operations of the elements located in the dry area and the additional sealing element (3).

9. Supporting module for vehicle doors according to claim 8, **characterised in that** the access opening (18) for completing the mounting operations is covered by an insert (17).

10. Supporting module for vehicle doors according to claim 8, **characterised in that** the insert (17) is attached to the trim panel (2) by clips.

11. Supporting module for vehicle doors according to claim 1, **characterised in that** the sealing element (3) incorporates a padding.

12. Supporting module for vehicle doors according to claim 1, **characterised in that** the sealing element (3) incorporates a support (29) of the lock (15).

13. Supporting module for vehicle doors according to claim 12, **characterised in that** the support (29) of the lock (15) is integrated in the sealing element (3).

14. Supporting module for vehicle doors according to claim 12, **characterised in that** the support (29) of the lock (15) has a groove (29.1) that acts as a guide for the window.

15. Supporting module for vehicle doors according to claim 1, **characterised in that** the sealing element (3) is provided with a security ribbing on the face visible from the inside to prevent any manipulation of the lock-inner opening handle.

16. Supporting module for vehicle doors according to claim 1, **characterised in that** the sealing element (3) acts as a means for attaching the window lift motor (19) during the supporting function until the time of installation.

17. Supporting module for vehicle doors according to claim 1, **characterised in that** the sealing element (3) acts as a means for attaching the wire harness during the supporting function until the time of installation.

18. Supporting module for vehicle doors according to claim 1, **characterised in that** on the trim panel (2) a pocket base (8) is mounted permanently on the trim panel (2) and a pocket front forms part of this trim panel (2) to configure a pocket for containing objects.

19. Supporting module for vehicle doors according to claim 1, **characterised in that** a pocket front is mounted permanently on the trim panel (2) and a pocket base (8) is part of the panel trim (2) to configure the pocket for containing objects.

20. Supporting module for vehicle doors according to claim 1, **characterised in that** the trim panel (2) incorporates one single window lift rail (13), one reducer motor (19), transmission means (16), one drum lid (14) and means for redirecting the transmission means.

21. Supporting module for vehicle doors according to claim 1, **characterised in that** the trim panel (2) incorporates a grille (10) for the speaker (6).

22. Supporting module for vehicle doors according to claim 1, **characterised in that** the sealing element (3) has a peripheral sealing gasket (21).

23. Supporting module for vehicle doors according to claim 1, **characterised in that** the means for attaching the sealing element (3) to the inner plate (1) of the door box are peripheral tabs (22).

24. Supporting module for vehicle doors according to claim 1, **characterised in that** the means for attaching the sealing element (3) to the inner plate (1) of the door box are pairs of peripheral tabs (22).

25. Supporting module for vehicle doors according to claim 1, **characterised in that** the upper attachment of the sealing element (3) to the inner plate (1) of the door box is achieved by screws.

26. Supporting module for vehicle doors according to claim 1, **characterised in that** a bottom edge of the sealing element (3) is provided with a second lip (28) such that the section of said bottom edge has a wedge-like "V" shape.

27. Supporting module for vehicle doors according to claim 1, **characterised in that** the inner plate (1) of the door box is provided with secondary orifices (7) for mounting and regulating the functional components of the door.

28. Supporting module for vehicle doors according to claim 27, **characterised in that** the secondary orifices (7) are sealed by sealing elements or gaskets to provide a sealing between the wet area and the dry area.

## Patentansprüche

1. Halterungsmodul (1) für Fahrzeugtüren in Form einer nicht zur Struktur gehörigen Platte, die an den Türen als Verkleidungsblende (2) dient und mindestens eine Kastenform mit wenigstens einer Öffnung besitzt, die der Bedienungsperson den manuellen Zugriff zur Montage ermöglicht, wobei die Komponenten im Wesentlichen im Nassbereich der Tür installiert sind und der Kasten noch weitere Öffnungen oder Löcher aufweisen kann, die nicht dem manuellen Zugriff durch die Bedienungsperson dienen, wie etwa eine Lautsprecheröffnung oder Hilfsöffnungen zum Durchreichen von Werkzeugen,
• wobei die Verkleidungsblende (2) an jeder in der inneren Platte (1) des Türkastens angebrachten Haupt-Montageöffnung (4) ein entsprechendes Dichtungselement (3) umfasst, das den Kasten abdeckt und eine dichte Trennung zwischen dem Trocken- und dem Nassbereich der Tür bildet;
• wobei die Verkleidungsblende (2) außerdem einen Verschluss (15) samt seiner Hülle (20) umfasst, die beide auf beliebige Weise am Dichtungselement (3) angebracht sind, wobei diese Baugruppe an der Verkleidungsblende (2) vorpositioniert ist und/oder auch mindestens eine Fensterhebeschiene (13), ein Getriebemotor (19), Mittel zur Kraftübertragung (16), ein Trommeldeckel (14) und Mittel zur Neuausrichtung der Kraftübertragungsmittel dort vorpositioniert sind;
**dadurch gekennzeichnet, dass**
das Dichtungselement (3) eigene Befestigungsmittel zur schnellen und einfachen Befestigung an der inneren Platte (1) des Türkastens (1) sowie vorübergehende Befestigungsmittel (25, 26, 33, 34) zur Befestigung an der Verkleidungsblende (2) aufweist.

2. Halterungsmodul für Fahrzeugtüren gemäß Anspruch 1, **dadurch gekennzeichnet, dass** die Verkleidungsblende (2) ein Dichtungselement (3) umfasst, das eine einzige Hauptmontageöffnung (4) abdeckt, die in die innere Platte (1) des Türkastens eingelassen ist.

3. Halterungsmodul für Fahrzeugtüren gemäß Anspruch 1, **dadurch gekennzeichnet, dass** die vorübergehenden Mittel zur Befestigung des Dichtungselements (3) an der Verkleidungsblende (2) angebracht werden, solange die Halterungsfunktion besteht, bis die Installation der Verkleidungsblende (2) durch vorübergehende Befestigungsmittel der ersten Art folgt.

4. Halterungsmodul für Fahrzeugtüren gemäß Anspruch 1, **dadurch gekennzeichnet, dass** die vorübergehenden Mittel zur Befestigung des Dichtungselements (3) an der Verkleidungsblende (2) angebracht werden, solange die Halterungsfunktion besteht, bis die Installation der Verkleidungsblende (2) folgt, wobei diese vorübergehende Verbindung während der Installation bestehen bleibt, sodass sich das Dichtungselement (3) bezüglich der Verkleidungsblende (2) auf zwei mögliche Weisen bewegen kann, nämlich einerseits senkrecht und andererseits im rechten Winkel zur Verkleidungsblende (2) und durch vorübergehende Befestigungsmittel der zweiten Art.

5. Halterungsmodul für Fahrzeugtüren gemäß Anspruch 3, **dadurch gekennzeichnet, dass** die vorübergehenden Befestigungsmittel der ersten Art des Dichtungselements (3) eine Reihe von Clips (33) sind und mindestens ein konisch geformter Vorsprung vorhanden ist, der eine Clip-Buchse (34) besitzt, welche das Dichtungselement (3) neben der Verkleidungsblende (2) hält.

6. Halterungsmodul für Fahrzeugtüren gemäß Anspruch 3, **dadurch gekennzeichnet, dass** das Dichtungselement (3) eine Klammer (32) ist, die eine erneute Verbindung des Dichtungselements (3) mit der Verkleidungsblende (2) an der Endposition gestattet.

7. Halterungsmodul für Fahrzeugtüren gemäß Anspruch 4, **dadurch gekennzeichnet, dass** die vorübergehenden Befestigungsmittel der zweiten Art (25, 26) zwei Zapfen (25) sind, die aus der Verkleidungsblende (2) herausragen und in einem Haltekopf (25.1) enden, der in Schlitze (26.1) passt, welche in kastenförmige Teile (26) eingelassen sind, die am Dichtungselement (3) derart befestigt sind, dass eine senkrechte Bewegung und eine waagerechte, rechtwinklig zur Verkleidungsblende (2) verlaufende Bewegung zwischen Dichtungselement (3) und Verkleidungsblende (2) möglich ist.

8. Halterungsmodul für Fahrzeugtüren gemäß Anspruch 4, **dadurch gekennzeichnet, dass** die Verkleidungsblende (2) außerdem mit einer Zugangsöffnung (18) ausgestattet ist, die zur Fertigstellung der Montage der im Trockenbereich angeordneten Elemente und des zusätzlichen Dichtungselements (3) dient.

9. Halterungsmodul für Fahrzeugtüren gemäß Anspruch 8, **dadurch gekennzeichnet, dass** die zur Fertigstellung der Montagearbeiten vorhandene Zugangsöffnung (18) von einem Einsatz (17) abgedeckt ist.

10. Halterungsmodul für Fahrzeugtüren gemäß Anspruch 8, **dadurch gekennzeichnet, dass** der Einsatz (17) mit Clips an der Verkleidungsblende (2) befestigt ist.

11. Halterungsmodul für Fahrzeugtüren gemäß Anspruch 1, **dadurch gekennzeichnet, dass** das Dichtungselement (3) eine Auskleidung umfasst.

12. Halterungsmodul für Fahrzeugtüren gemäß Anspruch 1, **dadurch gekennzeichnet, dass** das Dichtungselement (3) eine Halterung (29) des Verschlusses (15) umfasst.

13. Halterungsmodul für Fahrzeugtüren gemäß Anspruch 12, **dadurch gekennzeichnet, dass** die Halterung (29) des Verschlusses (15) in das Dichtungselement (3) integriert ist.

14. Halterungsmodul für Fahrzeugtüren gemäß Anspruch 12, **dadurch gekennzeichnet, dass** in die Halterung (29) des Verschlusses (15) eine Kerbe (29.1) eingelassen ist, die als Führung des Fensters dient.

15. Halterungsmodul für Fahrzeugtüren gemäß Anspruch 1, **dadurch gekennzeichnet, dass** das Dichtungselement (3) an seiner von innen sichtbaren Seite mit einer Sicherheitsrippung versehen ist, um die Betätigung oder Eingriffe in den Öffnungsgriff im Inneren des Verschlusses zu verhindern.

16. Halterungsmodul für Fahrzeugtüren gemäß Anspruch 1, **dadurch gekennzeichnet, dass** das Dichtungselement (3) während der vorübergehenden Halterungsfunktion bis zur Installation als Befestigungsmittel des Fensterhebemotors (19) dient.

17. Halterungsmodul für Fahrzeugtüren gemäß Anspruch 1, **dadurch gekennzeichnet, dass** das Dichtungselement (3) während der vorübergehenden Halterungsfunktion bis zur Installation als Befestigungsmittel des Kabelbaums dient.

18. Halterungsmodul für Fahrzeugtüren gemäß Anspruch 1, **dadurch gekennzeichnet, dass** eine Taschenbasis (8) ständig an der Verkleidungsblende (2) montiert ist und eine Taschenfront zur Verstauung von Gegenständen einen Teil der Verkleidungsblende (2) bildet.

19. Halterungsmodul für Fahrzeugtüren gemäß Anspruch 1, **dadurch gekennzeichnet, dass** eine Taschenfront ständig an der Verkleidungsblende (2) montiert ist und eine Taschenbasis (8) als Teil der Verkleidungsblende (2) zur Einrichtung dieser Taschen für das Verstauen von Gegenständen dient.

20. Halterungsmodul für Fahrzeugtüren gemäß Anspruch 1, **dadurch gekennzeichnet, dass** die Verkleidungsblende (2) eine einzige Fensterhebeschiene (13), einen Getriebemotor (19), Mittel zur Kraftübertragung (16), einen Trommeldeckel (14) und Mittel zur Neuausrichtung der Kraftübertragungsmittel umfasst.

21. Halterungsmodul für Fahrzeugtüren gemäß Anspruch 1, **dadurch gekennzeichnet, dass** die Verkleidungsblende (2) mit einem Gitter (10) für Lautsprecher (6) ausgestattet ist.

22. Halterungsmodul für Fahrzeugtüren gemäß Anspruch 1, **dadurch gekennzeichnet, dass** das Dichtungselement (3) eine rund um den Rand verlaufende Dichtung (21) besitzt.

23. Halterungsmodul für Fahrzeugtüren gemäß Anspruch 1, **dadurch gekennzeichnet, dass** das Dichtungselement (3) mittels rundum verlaufender Laschen (22) an der inneren Platte (1) des Türkastens befestigt ist.

24. Halterungsmodul für Fahrzeugtüren gemäß Anspruch 1, **dadurch gekennzeichnet, dass** das Dichtungselement (3) mittels Paaren rundum verlaufender Laschen (22) an der inneren Platte (1) des Türkastens befestigt ist.

25. Halterungsmodul für Fahrzeugtüren gemäß Anspruch 1, **dadurch gekennzeichnet, dass** Schrauben die obere Befestigung des Dichtungselements (3) an der inneren Platte (1) des Türkastens bilden.

26. Halterungsmodul für Fahrzeugtüren gemäß Anspruch 1, **dadurch gekennzeichnet, dass** eine Unterkante des Dichtungselements (3) mit einem zweiten Vorsprung (28) versehen ist und die genannte Unterkante somit eine keilähnliche V-Form aufweist.

27. Halterungsmodul für Fahrzeugtüren gemäß Anspruch 1, **dadurch gekennzeichnet, dass** die innere Platte (1) des Türkastens mit sekundären Öffnungen (7) versehen ist, die zur Montage und Regulierung der Funktionskomponenten der Tür dienen.

28. Halterungsmodul für Fahrzeugtüren gemäß Anspruch 27, **dadurch gekennzeichnet, dass** die sekundären Öffnungen (7) durch Dichtungselemente oder Dichtungen verschlossen sind, um den trockenen und den nassen Bereich dicht voneinander zu trennen.

## Revendications

1. Module de support pour portières de véhicule, construit sous forme de panneau non structurel, conçu pour agir comme un panneau de garnissage (2) sur les portières, ayant un boîtier avec au moins une ouverture principale, afin de permettre à un opérateur d'avoir un accès manuel pour le montage, essentiellement, des composants installés dans la zone humide, le boîtier étant apte à comporter d'autres ouvertures et orifices, non destinés à un accès manuel par l'opérateur, tels que des orifices auxiliaires ou de logement de haut-parleur pour permettre aux outils de passer, dans lequel :
* le panneau de garnissage (2) inclut, sur chaque ouverture de montage principale (4) prévue dans la plaque interne (1) du boîtier de portière, un élément d'étanchéité (3) correspondant, conçu pour la couvrir afin de produire une étanchéité entre la zone sèche et la zone humide de la portière;
* le panneau de garnissage (2) inclut également un verrou (15) et son carter (20), qui sont reliés à l'élément d'étanchéité (3) par un mode de fixation quelconque, l'ensemble étant pré-positionné sur le panneau de garnissage (2) et/ou au moins un rail de lève-vitres (13), ainsi qu'un moteur réducteur (19), un moyen de transmission (16), un couvercle de tambour (14) et un moyen de redirection du moyen de transmission,
**caractérisé en ce que**
l'élément d'étanchéité (3) présente son propre moyen de fixation, permettant une fixation rapide et simple à la plaque interne (1) du boîtier de portière, ainsi que d'autres moyens de fixation temporaire (25, 26, 33, 34) au panneau de garnissage (2).

2. Module de support pour portières de véhicule selon la revendication 1, **caractérisé en ce que** le panneau de garnissage (2) inclut un seul élément d'étanchéité (3) conçu pour recouvrir une seule ouverture de montage principale (4) présente dans la plaque interne (1) du boîtier de portière.

3. Module de support pour portières de véhicule selon la revendication 1, **caractérisé en ce que**, entre le panneau de garnissage (2) et l'élément d'étanchéité (3), les moyens de fixation temporaire sont mis en place pendant la fonction de support, jusqu'au moment de l'installation du panneau de garnissage (2) par un moyen de fixation temporaire du premier type.

4. Module de support pour portières de véhicule selon la revendication 1, **caractérisé en ce que**, entre le panneau de garnissage (2) et l'élément d'étanchéité (3), les moyens de fixation temporaire sont mis en place pendant la fonction de support jusqu'au moment de l'installation du panneau de garnissage (2) et maintiennent leur connexion temporaire pendant l'installation, de sorte que deux mouvements de l'élément d'étanchéité (3) par rapport au panneau de garnissage (2) sont possibles : un mouvement vertical et un autre mouvement perpendiculaire au panneau de garnissage (2) par les moyens de fixation temporaire du second type.

5. Module de support pour portières de véhicule selon la revendication 3, **caractérisé en ce que** les moyens de fixation temporaire du premier type de l'élément d'étanchéité (3) sont constitués d'un certain nombre d'attaches (33) et d'au moins une saillie avec une forme tronconique, qui présente une attache femelle (34) qui permet de maintenir l'élément d'étanchéité (3) à côté du panneau de garnissage (2).

6. Module de support pour portières de véhicule selon la revendication 3, **caractérisé en ce que**, sur l'élément d'étanchéité (3), se trouve une patte (32) qui permet de rejoindre l'élément d'étanchéité (3) avec le panneau de garnissage (2) dans la position finale.

7. Module de support pour portières de véhicule selon la revendication 4, **caractérisé en ce que** les moyens de fixation temporaire du second type (25, 26) consistent en des pivots (25) qui émergent depuis le panneau de garnissage (2) et se terminent au niveau d'une tête de retenue (25.1), qui s'ajustent dans des fentes (26.1) réalisées dans des boîtiers (26) fixés sur l'élément d'étanchéité, qui permettent un mouvement vertical relatif et un mouvement horizontal perpendiculaire au panneau de garnissage (2) entre l'élément d'étanchéité (3) et le panneau de garnissage (2).

8. Module de support pour portières de véhicule selon la revendication 4, **caractérisé en ce que** le panneau de garnissage (2) est également doté d'une ouverture d'accès (18) pour terminer les opérations de montage finales des éléments situés dans la zone sèche et de l'élément d'étanchéité supplémentaire (3).

9. Module de support pour portières de véhicule selon la revendication 8, **caractérisé en ce que** l'ouverture d'accès (18) pour terminer les opérations de montage est recouverte par un insert (17).

10. Module de support pour portières de véhicule selon la revendication 8, **caractérisé en ce que** l'insert (17) est fixé sur le panneau de garnissage (2) par des attaches.

11. Module de support pour portières de véhicule selon la revendication 1, **caractérisé en ce que** l'élément d'étanchéité (3) inclut un rembourrage.

12. Module de support pour portières de véhicule selon la revendication 1, **caractérisé en ce que** l'élément d'étanchéité (3) inclut un support (29) du verrou (15).

13. Module de support pour portières de véhicule selon la revendication 12, **caractérisé en ce que** le support (29) du verrou (15) est intégré dans l'élément d'étanchéité (3).

14. Module de support pour portières de véhicule selon la revendication 12, **caractérisé en ce que** le support (29) du verrou (15) présente une rainure (29.1) qui agit comme guide pour la fenêtre.

15. Module de support pour portières de véhicule selon la revendication 1, **caractérisé en ce que** l'élément d'étanchéité (3) est doté d'une nervure de sécurité sur la face visible depuis l'intérieur, afin d'éviter toute manipulation de la poignée d'ouverture interne à verrou.

16. Module de support pour portières de véhicule selon la revendication 1, **caractérisé en ce que** l'élément d'étanchéité (3) agit comme un moyen de fixation du moteur lève-vitres (19) pendant la fonction de support, jusqu'au moment de l'installation.

17. Module de support pour portières de véhicule selon la revendication 1, **caractérisé en ce que** l'élément d'étanchéité (3) agit comme un moyen de fixation du faisceau de câblages pendant la fonction de support jusqu'au moment de l'installation.

18. Module de support pour portières de véhicule selon la revendication 1, **caractérisé en ce que**, sur le panneau de garnissage (2), une base de poche (8) est montée permanente sur le panneau de garnissage (2) et un côté avant de la poche forme une partie de ce panneau de garnissage (2) pour configurer une poche destinée à contenir des objets.

19. Module de support pour portières de véhicule selon la revendication 1, **caractérisé en ce qu'**un côté avant de la poche est monté permanent sur le panneau de garnissage (2) et une base de la poche (8) forme une partie du panneau de garnissage (2) afin de configurer la poche pour contenir des objets.

20. Module de support pour portières de véhicule selon la revendication 1, **caractérisé en ce que** le panneau de garnissage (2) inclut un seul rail de lève-vitres (13), un moteur réducteur (19), un moyen de transmission (16), un couvercle de tambour (14) et un moyen de redirection du moyen de transmission.

21. Module de support pour portières de véhicule selon la revendication 1, **caractérisé en ce que** le panneau de garnissage (2) inclut une grille (10) pour le haut-parleur (6).

22. Module de support pour portières de véhicule selon la revendication 1, **caractérisé en ce que** l'élément d'étanchéité (3) présente un joint d'étanchéité périphérique (21).

23. Module de support pour portières de véhicule selon la revendication 1, **caractérisé en ce que** le moyen de fixation de l'élément d'étanchéité (3) à la plaque interne (1) du boîtier de portière est constitué de languettes périphériques (22).

24. Module de support pour portières de véhicule selon la revendication 1, **caractérisé en ce que** le moyen de fixation de l'élément d'étanchéité (3) à la plaque interne (1) du boîtier de portière est constitué de paires de languettes périphériques (22).

25. Module de support pour portières de véhicule selon la revendication 1, **caractérisé en ce que** la fixation supérieure de l'élément d'étanchéité (3) à la plaque interne (1) du boîtier de portière est réalisée par des vis.

26. Module de support pour portières de véhicule selon la revendication 1, **caractérisé en ce qu'**un bord inférieur de l'élément d'étanchéité (3) est doté d'une seconde lèvre (28), de sorte que la section dudit bord inférieur présente une forme de coin en « V ».

27. Module de support pour portières de véhicule selon la revendication 1, **caractérisé en ce que** la plaque interne (1) du boîtier de portière est doté d'orifices secondaires (7) pour le montage et le réglage des composants fonctionnels de la portière.

28. Module de support pour portières de véhicule selon la revendication 27, **caractérisé en ce que** les orifices secondaires (7) sont scellés par des joints ou éléments d'étanchéité, afin d'établir une étanchéité entre la zone humide et la zone sèche.
